(19) Europäisches Patentamt
European Patent Office
Office européen des brevets

(11) **EP 2 348 889 B1**

(12) **FASCICULE DE BREVET EUROPEEN**

(45) Date de publication et mention
de la délivrance du brevet:
**09.10.2019 Bulletin 2019/41**

(21) Numéro de dépôt: **09760207.2**

(22) Date de dépôt: **23.10.2009**

(51) Int Cl.:
*A23P 30/10* (2016.01)          *A23P 30/20* (2016.01)
*A23L 7/196* (2016.01)          *A23L 33/15* (2016.01)
*A23L 33/16* (2016.01)          *A23L 33/21* (2016.01)

(86) Numéro de dépôt international:
**PCT/FR2009/052044**

(87) Numéro de publication internationale:
**WO 2010/046613 (29.04.2010 Gazette 2010/17)**

(54) **PROCÉDÉ DE FABRICATION D'UN GRAIN DE RIZ RECONSTITUÉ**

VERFAHREN ZUR HERSTELLUNG EINES REKONSTITUIERTEN REISKORN

PROCESS FOR MANUFACTURING RECONSTITUTED GRAIN OF RICE

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **24.10.2008 FR 0805937**

(43) Date de publication de la demande:
**03.08.2011 Bulletin 2011/31**

(73) Titulaire: **Panzani
69006 Lyon (FR)**

(72) Inventeurs:
• **AREKION, Isabelle, Françoise
F-13004 Marseille (FR)**

• **MINIER, Chantal, Lucie, Paulette
F-13400 Aubagne (FR)**

(74) Mandataire: **Weber, Jean-François et al
Cabinet Didier Martin
Les Terrasses des Bruyères -Bâtiment C
314 C Allée des Noisetiers
69760 Limonest (FR)**

(56) Documents cités:
**EP-A- 0 226 375          EP-A- 0 913 096
EP-A- 1 166 648          WO-A-2005/053433
CH-A5- 600 795          US-A- 2 720 460
US-A- 4 446 163          US-A- 4 769 251
US-A- 6 026 737**

**Description**

La présente invention se rapporte au domaine technique général de l'alimentation, notamment à base de céréales destinées à la consommation humaine. La présente invention se rapporte plus précisément au domaine des céréales reconstituées et des procédés de traitement des céréales exemptes de gluten, tel que le riz.

La présente invention concerne plus particulièrement un grain de riz reconstitué (non revendiqué) obtenu à partir d'un mélange comprenant une farine composée d'au moins une céréale exempte de gluten.

La présente invention concerne en outre un dispositif (non revendiqué) destiné à la mise en forme d'un grain de riz reconstitué.

La présente invention concerne par ailleurs une installation (non revendiquée) destinée à la fabrication d'un grain de riz reconstitué.

La présente invention concerne enfin un procédé de fabrication d'un grain de riz reconstitué susceptible d'être conforme au grain de riz reconstitué susmentionné, ledit procédé comprenant :

- une étape (a) de fabrication d'un mélange comprenant une farine composée d'au moins une céréale exempte de gluten, le mélange de l'étape (a) comprenant également au moins une substance alimentaire, ajoutée à la farine, et présentant une fonction nutritionnelle et/ou organoleptique,

- une étape (c) de chauffage du mélange s'effectuant à une température sensiblement supérieure à 100°C,

- une étape (d) de compression du mélange, ladite étape (d) étant destinée à assurer une cohésion dudit mélange,

- une étape (e) de mise en forme du mélange sous forme de grains de riz.

TECHNIQUE ANTERIEURE

Le riz est une céréale mondialement consommée qui sert de base à l'alimentation d'une majorité de personnes, notamment en Asie et en Afrique. En général, le riz est consommé après avoir subi plusieurs traitements destinés à retirer certaines des enveloppes qui entourent le grain de riz au moment de sa récolte, ce grain de riz récolté étant classiquement appelé riz « *paddy* ». Une première enveloppe appelée « *balle* » est généralement enlevée, le plus souvent mécaniquement, car elle est impropre à la consommation. Au terme de cette opération, le grain de riz obtenu est susceptible d'être consommé et on le nomme classiquement riz complet ou riz « *cargo* ».

Toutefois, le riz complet, bien que consommable, est peu attractif pour les consommateurs, en raison en particulier de sa couleur terne, de son goût, de sa texture râpeuse et de son temps de cuisson long. Les consommateurs lui préfèrent un riz *« blanchi* », consommé massivement, dans lequel le péricarpe a été enlevé, le plus souvent par usinage.

Pourtant le riz blanchi a perdu une grande quantité de ses qualités nutritionnelles. En effet, pour l'essentiel, les éléments nutritifs intéressants du riz sont présents dans les enveloppes qui l'entourent, en particulier dans son péricarpe.

Pour pallier à cette perte nutritionnelle, il est connu d'avoir recours à un enrichissement d'un grain de riz blanchi de manière à obtenir un grain de riz blanchi présentant des qualités nutritionnelles améliorées. Un procédé connu d'enrichissement consiste à enrober avec un mélange de vitamines et minéraux le grain de riz blanchi, ayant ou non subit un étuvage destiné à le rendre moins collant. Ce procédé n'est toutefois pas suffisamment efficace pour permettre de conserver une quantité optimale de nutriments après la cuisson du grain de riz. En effet, l'eau et la température utilisées au cours de l'opération de cuisson ont tendance à dissoudre l'enrobage en vitamines et minéraux du grain de riz.

Afin d'améliorer ce procédé d'enrichissement d'un grain de riz blanchi, il est connu d'enrichir à coeur le grain de riz avec des nutriments tels que des vitamines et des minéraux. Ce procédé fait notamment intervenir une phase de mise en contact du grain de riz avec des nutriments, de manière à ce que ces derniers pénètrent à l'intérieur du grain de riz.

Si ce procédé permet le maintien des nutriments dans le grain de riz, il n'en présente pas moins certains inconvénients et pourrait, dans certaines conditions, être optimisé.

En effet, ce procédé ne permet pas un ajout important de vitamines et de minéraux dans le grain de riz. En outre, ce procédé est compliqué et lent car il nécessite une longue période de contact des vitamines et minéraux avec le grain de riz. Par ailleurs, la pénétration des vitamines et minéraux ne se fait pas toujours de manière assez profonde dans le grain de riz.

Pour pallier aux inconvénients précédents, il est également connu d'utiliser un procédé de reconstitution d'un grain de riz. En général, on fabrique, dans un premier temps, un mélange à base de farine de riz, de vitamines et de minéraux. Le mélange est ensuite hydraté et chauffé de manière à ce que l'amidon gélatinise, au moins en partie, pour assurer une cohésion satisfaisante de l'ensemble. Enfin, le mélange est conformé pour prendre la forme de grains de riz naturels, lesquels sont ensuite séchés.

Ce procédé permet d'obtenir des grains de riz reconstitués dans lesquels sont inclus des vitamines et des minéraux.

Toutefois, ce procédé n'est pas encore optimisé. En effet, les grains de riz reconstitués obtenus par ce procédé présentent classiquement un mauvais aspect visuel et un état de surface irrégulier qui rendent ces grains de riz peu attractifs pour les consommateurs, lesquels recherchent avant tout un grain de riz visuellement proche du grain de riz naturel blanchi.

En outre, ces grains de riz reconstitués ont tendance à rancir rapidement et ne présentent pas une texture homogène.

Le document EP-0 913 096 divulgue un procédé pour la préparation de grains de riz reconstituables comprenant les étapes consistant à cuire un mélange de farine de riz, d'eau et d'huile hydrogénée dans un dispositif de cuisson-extrusion fonctionnant entre 100 et 500 tours par minute et à une température comprise entre 70 et 150°C pour former un mélange partiellement gélatinisé, former le mélange partiellement gélatinisé en morceaux en forme de grains de riz, et sécher et refroidir les morceaux à température ambiante pour fournir des grains de riz reconstituables.

EXPOSE DE L'INVENTION

Les objets assignés visent par conséquent à porter remède aux différents inconvénients susmentionnés et à proposer un nouveau grain de riz reconstitué présentant un bon comportement à la cuisson, une conservation correcte et un aspect identique à celui d'un grain de riz naturel.

Un autre objet vise à proposer un nouveau grain de riz reconstitué participant efficacement à l'équilibre nutritionnel et organoleptique de la ration alimentaire des consommateurs.

Un autre objet vise à proposer un nouveau grain de riz reconstitué dont l'aspect est attractif pour les consommateurs.

Un autre objet vise à proposer un nouveau grain de riz reconstitué qui présente un maintien efficace et fiable à la cuisson.

Un autre objet vise à proposer un nouveau grain de riz reconstitué dont les caractéristiques nutritionnelles et/ou organoleptiques sont supérieures à celles d'un grain de riz blanchi.

Un autre objet vise à proposer un nouveau grain de riz reconstitué qui contribue efficacement à un équilibre nutritionnel de l'alimentation humaine tout en satisfaisant les attentes visuelles et organoleptiques des consommateurs.

Un autre objet vise à proposer un nouveau dispositif destiné à la mise en forme d'un grain de riz reconstitué qui permet l'obtention d'un grain de riz reconstitué dont l'aspect et la forme sont identiques à ceux d'un grain de riz naturel.

Un autre objet vise à proposer une nouvelle installation destinée à la fabrication d'un grain de riz reconstitué permettant d'obtenir d'un grain de riz reconstitué présentant un bon comportement à la cuisson, une conservation correcte et un aspect identique à celui d'un grain de riz naturel blanchi.

Un autre objet de l'invention vise à proposer un nouveau procédé de fabrication d'un grain de riz reconstitué qui soit facile et rapide à mettre en oeuvre, et qui permette d'obtenir un grain de riz reconstitué présentant un bon comportement à la cuisson, une bonne conservation et un aspect identique à celui d'un grain de riz naturel.

Un autre objet de l'invention vise à proposer un nouveau procédé de fabrication d'un grain de riz reconstitué dans lequel les étapes d'hydratation et de chauffage sont simples, rapides et ajustables.

Un autre objet de l'invention vise à proposer un nouveau procédé de fabrication d'un grain de riz reconstitué qui permet l'obtention d'un grain de riz présentant une bonne cohésion et une tenue satisfaisante.

Un autre objet de l'invention vise à proposer un nouveau procédé de fabrication d'un grain de riz reconstitué permettant l'obtention d'un grain de riz de consistance homogène.

Un autre objet de l'invention vise à proposer un nouveau procédé de fabrication d'un grain de riz reconstitué qui facilite la mise en forme du mélange sous forme de grains de riz naturel.

Un autre objet de l'invention vise à proposer un nouveau procédé de fabrication d'un grain de riz reconstitué utilisant une céréale mondialement connue et consommée, facilement disponible et bon marché.

Un autre objet de l'invention vise à proposer un nouveau procédé de fabrication d'un grain de riz reconstitué qui permette l'obtention d'un grain de riz reconstitué présentant des caractéristiques nutritionnelles proches de celles d'un grain de riz naturel peu ou pas traité.

Un autre objet de l'invention vise à proposer un nouveau procédé de fabrication d'un grain de riz reconstitué permettant l'obtention d'un grain de riz reconstitué qui garantit un équilibre nutritionnel au consommateur tout en satisfaisant les attentes organoleptiques du consommateur.

Un autre objet de l'invention vise à proposer un nouveau procédé de fabrication d'un grain de riz reconstitué permettant l'obtention d'un grain de riz reconstitué qui satisfait le consommateur aussi bien en termes d'appétence qu'en termes de qualités nutritionnelles.

Un autre objet de l'invention vise à proposer un nouveau procédé de fabrication d'un grain de riz reconstitué permettant l'obtention d'un grain de riz reconstitué dont les caractéristiques nutritionnelles et/ou organoleptiques sont supérieures à celles d'un grain de riz blanchi.

Un autre objet de l'invention vise à proposer un nouveau procédé de fabrication d'un grain de riz reconstitué permettant l'obtention d'un grain de riz reconstitué qui présente une texture homogène et proche de celle d'un grain de riz naturel.

Un autre objet de l'invention vise à proposer un nouveau procédé de fabrication d'un grain de riz reconstitué qui permette l'obtention d'un grain de riz reconstitué dont l'aspect visuel est proche de celui d'un grain de riz naturel blanchi et qui est donc particulièrement attractif pour le consommateur.

Un autre objet de l'invention vise à proposer un nouveau procédé de fabrication d'un grain de riz reconstitué permettant l'obtention d'un grain de riz reconstitué qui présente une tenue et un comportement à la cuisson identiques à celui d'un grain de riz naturel.

Les objets assignés à l'invention sont atteints à l'aide d'un procédé de fabrication d'un grain de riz reconstitué selon la revendication 1.

D'autres objets, caractéristiques et avantages de l'invention apparaîtront plus en détails à la lecture de la description qui suit ainsi qu'à l'aide des exemples fournis à titre purement illustratif et non limitatif.

MEILLEURE MANIERE DE REALISER L'INVENTION

Le procédé de l'invention est un procédé de fabrication d'un grain de riz reconstitué. Au sens de l'invention, on entend par grain de riz reconstitué, un grain de riz artificiel, c'est-à-dire non naturel, qui a été entièrement fabriqué à partir de matières premières identiques ou non au grain de riz naturel.

Le procédé de l'invention est préférentiellement un procédé facilement industrialisable qui peut être mis en oeuvre à grande échelle. Il est cependant envisageable que le procédé de l'invention soit réalisé de manière artisanale ou manuelle.

Le procédé de l'invention comprend tout d'abord une étape (a) de fabrication d'un mélange comprenant une farine composée d'au moins une céréale exempte de gluten. Avantageusement, la farine de l'étape (a) est majoritairement composée de riz. Le riz étant la première céréale consommée dans le monde, il présente l'intérêt d'être une céréale peu onéreuse, accessible, produite et consommée en grande quantité. De préférence, on utilise une farine de riz native fabriquée à partir de brisures ou de grains de riz de type indica. Il est toutefois envisageable, sans sortir du cadre de la présente invention, d'utiliser un autre groupe de riz, par exemple japonica ou javanica.

De préférence, les grains de riz utilisés pour la fabrication du mélange de l'étape (a) sont des grains riz cargo, c'est-à-dire qu'ils ont subi un traitement pour enlever certaines de leurs enveloppes extérieures de manière à les rendre consommables. Il est cependant possible d'utiliser également des grains de riz blanchis.

Avantageusement, on choisit un riz indica qui présente une teneur en amylose sensiblement supérieure à 22 % en poids. En outre, la granulométrie du mélange obtenu à l'étape (a) est préférentiellement destinée à être sensiblement inférieure à 500 $\mu$m, de préférence sensiblement inférieure à 250 $\mu$m. Avantageusement, il est également possible que la granulométrie de la farine de riz utilisée à l'étape (a) soit essentiellement inférieure à 200 $\mu$m, de préférence inférieure à 125 $\mu$m.

Alternativement, il est envisageable d'utiliser une farine de maïs, de millet ou d'une autre céréale exempte de gluten. Il est également possible de mélanger plusieurs farines de céréales exemptes de gluten.

Le mélange de l'étape (a) comprend également au moins une substance alimentaire présentant une fonction nutritionnelle et/ou organoleptique, Au sens de l'invention, on entend par substance alimentaire un élément compatible avec la consommation humaine ou animale et destiné à être ajouté à la farine de l'étape (a). La substance alimentaire présente des caractéristiques lui permettant de jouer un rôle nutritionnel et/ou organoleptique dans le grain de riz reconstitué obtenu au terme du procédé.

En d'autres termes, la substance alimentaire remplit une fonction nutritive, en améliorant par exemple les teneurs en glucides, lipides et/ou protéines, ou plus généralement la qualité nutritionnelle de la farine qui sert de base à l'élaboration du grain de riz reconstitué. En outre, la substance alimentaire, par sa fonction organoleptique, contribue à donner à la farine de l'étape (a) des caractéristiques, notamment en termes de goût, de texture, d'odeur et de couleur, qui seront perceptibles par le consommateur au moment de la consommation du grain de riz reconstitué à partir de ce mélange.

Dans un mode de réalisation avantageux, ladite au moins une substance alimentaire de l'étape (a) comprend au moins une fibre alimentaire, On entend par fibre alimentaire un élément végétal ou un extrait végétal, non digéré par les enzymes digestives et qui a une fonction d'amélioration du transit intestinal. La fibre alimentaire, soluble ou insoluble, peut être apportée sous forme de légumes, de fruits, d'extraits végétaux ou de fibres végétales extraites de végétaux. Alternativement, il est également envisageable que la fibre alimentaire comprenne un amidon résistant. Son ajout à la farine de riz contribue à l'obtention d'un grain de riz reconstitué qui favorise le transit intestinal de manière similaire à un grain de riz naturel complet. La fibre alimentaire présente donc de préférence une fonction nutritionnelle dans le grain de riz reconstitué.

Ladite au moins une substance alimentaire de l'étape (a) présente, de préférence, une fonction organoleptique et est choisie parmi : les poudres de légumes, les extraits végétaux, les épices, les colorants et les arômes. L'addition d'au moins l'un de ces composés au mélange permet d'obtenir un grain de riz reconstitué qui présente un goût voire une flaveur sensiblement différente de celle d'un grain de riz naturel. Il est ainsi envisageable d'ajouter par exemple à la farine une poudre de tomate ou de poireaux, laquelle donne un goût et une odeur de tomate ou de poireaux au grain de riz reconstitué après sa cuisson.

Alternativement, ladite au moins une substance alimentaire de l'étape (a) présente une fonction nutritionnelle et est de préférence choisie parmi : les vitamines, les minéraux, les éléments trace, les acides gras insaturés et les acides aminés. Au sens de l'invention, ces substances alimentaires font partie des nutriments, c'est-à-dire des éléments apportés dans la farine et destinés à être assimilés directement par l'organisme du consommateur pour y jouer un rôle nutritionnel. Le nutriment est classiquement une molécule qui a une fonction nutritionnelle, comme par exemple un amidon résistant, une vitamine B1, B3, B5, B6 ou B9, du phosphore, du magnésium, un oméga 3, etc.

De manière préférentielle, le mélange obtenu à l'étape (a) peut contenir une ou plusieurs substances alimentaires choisie(s) parmi : les fibres alimentaires, les poudres de légumes, les extraits végétaux, les épices, les colorants, les arômes les vitamines, les minéraux, les éléments trace, les acides gras insaturés et les acides aminés. Alternativement, toute autre substance alimentaire, possédant des propriétés nutritionnelles et/ou organoleptiques compatibles avec la fabrication d'un grain de riz reconstitué conforme à l'invention, est envisageable. La substance alimentaire est avantageusement sélectionnée en fonction des caractéristiques nutritionnelles et/ou organoleptiques souhaitées pour le grain de riz reconstitué. En général, les propriétés organoleptiques recherchées se rapportent à la couleur, à l'odeur et à la flaveur du grain de riz. Par exemple, l'ajout d'une poudre de légumes apporte une coloration plus ou moins importante au mélange, un goût différent du grain riz naturel et améliore sensiblement certains paramètres nutritionnels.

Un grain de riz reconstitué contenant une telle substance alimentaire est destiné à être plus appétant, par sa couleur et son goût notamment, pour le consommateur. Alternativement, si son goût est identique à celui d'un grain de riz naturel blanchi, le grain de riz reconstitué comprend une composition nutritionnelle améliorée par rapport à ce riz naturel blanchi. Dans un mode de réalisation préférentielle, on privilégie la fabrication d'un grain de riz reconstitué qui allie appétence et qualités nutritionnelles.

Avantageusement, le grain de riz reconstitué contient au moins 0,5 % en poids de ladite au moins une substance alimentaire. De préférence, la substance alimentaire représente au moins 3 %, de préférence sensiblement égale à 7 % en poids du grain de riz reconstitué obtenu en fin de procédé. Le procédé de l'invention permet donc d'ajouter des substances alimentaires, telles que définies ci-avant, dans des proportions et une variété supérieures à celles de l'art antérieur.

De surcroît, le mélange de l'étape (a) peut comprendre un additif permettant de renforcer la texture du grain de riz reconstitué. On utilise classiquement des monoglycérides ou diglycérides qui représentent moins de 5 % en poids du grain de riz reconstitué obtenu.

La substance alimentaire est mélangée avec la farine de riz, au cours de l'étape (a), de manière à obtenir un mélange homogène. Préalablement à cette étape (a), il est envisageable d'avoir recours à une étape de broyage destinée à réduire et à homogénéiser la granulométrie de la farine et de la substance alimentaire. De manière avantageuse, la granulométrie du mélange obtenu à l'étape (a) est destinée à être sensiblement inférieure à 500 $\mu$m, de préférence sensiblement inférieure à 250 $\mu$m. Une telle granulométrie, homogène et fine, favorise l'obtention d'un grain de riz reconstitué dont la texture est sensiblement identique à celle d'un grain de riz naturel. En effet, la granulométrie du mélange contribue avantageusement à l'obtention d'un grain de riz de texture homogène sensiblement semblable à celle d'un grain de riz naturel.

L'étape (a) est réalisée dans un récipient de mélange à l'aide de doseurs volumétriques à vis ou préférentiellement de doseurs pondéraux, lesquels permettent d'ajuster finement les pourcentages de ladite au moins une substance alimentaire et de ladite farine.

Postérieurement à l'étape (a), le procédé de l'invention comprend une étape (b) d'hydratation du mélange obtenu au cours de l'étape (a). L'hydratation du mélange se fait avantageusement par un apport d'eau de manière à obtenir à la fin de l'étape (b) un mélange présentant une humidité sensiblement comprise entre sensiblement 25 et 50 %, de préférence entre sensiblement 28 et 37 %.

Le procédé comprend en outre une étape (c) de chauffage du mélange au cours de laquelle un apport de chaleur au mélange est réalisé. L'étape (c) de chauffage dudit mélange s'effectue à une température sensiblement supérieure à 100°C. De préférence, la température au cours de l'étape (c) est au moins égale à 150°C, de préférence sensiblement supérieure à 150°C. L'étape (c) comprend avantageusement un apport de vapeur et la quantité de vapeur ajoutée représente entre sensiblement 4 à 10 % du poids sec du mélange.

De manière avantageuse, l'étape (b) comprend également un apport de chaleur au cours duquel la température est sensiblement inférieure à 70°C, de préférence inférieure à 50°C, de préférence sensiblement égale à 45°C. Cet apport de chaleur est préférentiellement réalisé simultanément à l'apport d'eau de l'étape (b), en particulier grâce à un apport d'eau préalablement chauffée à une température de préférence sensiblement comprise entre 40 et 50°C. Un tel apport de chaleur permet, de manière avantageuse, d'accélérer l'hydratation du mélange.

L'étape (c) de chauffage ainsi que l'apport de chaleur au cours de l'étape (b) sont avantageusement des étapes de traitement thermique qui n'affectent pas les qualités nutritionnelles et/ou organoleptiques du grain de riz, à la différence de certains traitements thermiques antérieurs qui peuvent s'apparenter à une cuisson.

Dans un mode de réalisation particulièrement avantageux du procédé de l'invention, les étapes (b) et (c) sont concomitantes, l'hydratation du mélange en présence d'eau se faisant sensiblement en même temps que le chauffage dudit mélange. En d'autres termes, le procédé met en oeuvre simultanément un apport d'eau et de vapeur de manière à hydrater et à chauffer en même temps le mélange.

Les étapes (b) et (c) sont avantageusement destinées à gélatiniser, au moins en partie, l'amidon contenu dans le mélange, de manière à obtenir un mélange sensiblement cohérent. En effet, en l'absence de gluten, le mélange ne présente pas une viscoélasticité suffisante pour assurer une cohésion d'ensemble stable. Dès lors, on fait subir à l'amidon contenu dans le mélange une gélatinisation, au moins partielle, laquelle favorise une tenue et une élasticité optimale du mélange pour permettre une reconstitution naturelle d'un grain de riz. Cette gélatinisation maîtrisée de l'amidon, notamment par apport précis d'eau et de vapeur à très haute température, contribue à l'obtention d'un mélange dont la viscoélasticité est satisfaisante pour sa mise en forme ultérieure.

En général, les étapes (a), (b) et (c) sont réalisées en quelques minutes, de préférence en moins de quinze minutes, avantageusement en moins de cinq minutes. Au cours de ces étapes, le mélange est maintenu en mouvement, sous l'effet d'une vis de rotation par exemple. Cette mise en mouvement a pour principal objectif de maintenir un mélange parfaitement homogène en tout point, sans toutefois appliquer des forces de cisaillement importantes susceptibles d'affecter les propriétés dudit mélange.

Le procédé de l'invention comprend ensuite une étape (d) de compression du mélange, ladite étape (d) étant destinée à assurer une cohésion dudit mélange. Au cours de l'étape (d) de compression du mélange, une pression est appliquée au mélange afin d'obtenir un mélange parfaitement cohérent, la pression étant destinée à être sensiblement au moins égale à 10 bars, de préférence comprise entre sensiblement 10 et 60 bars.

Préalablement à l'étape (d), le procédé comprend, de manière avantageuse, une étape (f) de vide d'air destinée à éliminer les bulles d'air susceptibles d'être présentes dans le mélange. L'étape (f) favorise l'obtention d'un grain de riz sensiblement translucide, la suppression des bulles d'air permettant d'améliorer la transmission de la lumière au sein du grain de riz. Dans un mode de réalisation préféré du procédé, l'étape (d) de compression du mélange se fait donc sous vide, avantageusement sous un vide d'air supérieur à 400 mbars. En outre, l'application d'un tel vide d'air améliore avantageusement la qualité du grain de riz obtenu dans la mesure où il contribue à l'obtention d'un grain de riz de texture homogène.

En général, l'étape (d) de compression est réalisée au sein d'une vis d'extrusion classiquement utilisée dans la fabrication de pâtes alimentaires. Dans cette vis d'extrusion, le mélange est soumis à des forces de cisaillement et de pression, ce qui entraîne une augmentation de la pression qui dépasse notamment 30 bars, sans toutefois que ces forces de cisaillement, de faible puissance, affectent la texture et les propriétés nutritionnelles et organoleptiques du mélange.

Postérieurement à l'étape (d), le procédé comprend une étape (e) de mise en forme du mélange sous forme de grains de riz. L'étape (e) vise en particulier à donner au mélange une forme sensiblement identique à celle des grains des riz naturels. L'étape (e) comprend, de manière avantageuse, une étape d'extrusion au cours de laquelle le mélange obtenu à l'étape (d) est forcé à travers une filière.

En particulier, à la sortie de la vis d'extrusion, l'étape (e) de mise en forme du mélange sous forme de grains de riz comprend une sous-étape de moulage dudit mélange obtenu à l'étape (d), ladite sous-étape de moulage étant réalisée à l'aide d'un moule en forme sensiblement de grain de riz. En d'autres termes, le mélange est poussé, c'est-à-dire contraint ou forcé, à travers un moule en forme de grain de riz. Avantageusement, un couteau rotatif placé sous le moule à la sortie de ce dernier permet de couper les grains de riz à l'épaisseur souhaitée. Il est ainsi possible, en modulant la vitesse de rotation du couteau, de modifier l'épaisseur du grain de riz reconstitué.

Ledit moule a une surface intérieure recouverte d'un revêtement en polymère thermoplastique destiné à assurer l'obtention d'un grain de riz reconstitué présentant une surface lisse. De préférence, le revêtement intérieur du moule est en téflon et présente l'intérêt de garantir l'obtention d'un grain de riz reconstitué dont l'aspect visuel est sensiblement identique à celui d'un grain de riz naturel blanchi, étuvé ou non. Un tel moulage en sortie d'extrudeuse favorise ainsi avantageusement l'obtention d'un grain de riz reconstitué dont la forme, la surface et l'aspect sont sensiblement identiques à ceux d'un grain de riz naturel, de sorte qu'il présente pour le consommateur un attrait visuel identique à celui d'un grain de riz naturel. En l'espèce, le grain de riz reconstitué selon l'invention conserve sa forme sensiblement identique à celle d'un grain de riz naturel et n'est pas expansé en sortie d'extrudeuse ou après. Le procédé de l'invention ne constitue donc préférentiellement pas un procédé d'expansion dans lequel le grain de riz reconstitué est expansé, en vue notamment d'une prise d'eau rapide lors de son utilisation ultérieure.

Postérieurement à l'étape (e), le procédé comprend une étape de séchage au cours de laquelle un contrôle permanent de la température et de l'humidité permet d'obtenir un grain de riz reconstitué dépourvu de fissures présentant une répartition homogène de son humidité.

De préférence, les grains de riz reconstitués obtenus à l'étape (e) sont séchés au cours d'un processus de séchage subdivisé en quatre étapes. La première étape consiste en un séchage à l'air très sec, à une température sensiblement inférieure à 90°C, de manière à obtenir une légère croûte superficielle sur les grains de riz reconstitués, ladite croûte permettant de figer la forme des grains de riz. L'humidité des grains de riz à l'issue de la première étape est de préférence sensiblement comprise entre 25 et 30 %.

Le séchage comprend ensuite une deuxième étape correspondant à une déshydratation des grains de riz. Au cours de la deuxième étape, on utilise un air de séchage dont la température est sensiblement supérieure à 70°C et dont l'hygrométrie est constante et maîtrisée. Au terme de la deuxième étape, les grains de riz présentent une humidité sensiblement inférieure à 15 %.

Une troisième étape de séchage, correspondant à une stabilisation du produit, est réalisée à une température sensiblement supérieure à 70°C avec une humidité de l'air constante et maîtrisée. Cette étape de séchage est principalement destinée à répartir de manière homogène l'humidité dans l'ensemble du grain de riz, tout en maintenant une plasticité correcte de ce dernier. Cette étape permet en outre d'éviter la formation de fissures dans le grain sec, notamment au cours de sa conservation. Un autre intérêt de cette étape réside dans un renforcement de la texture du grain de riz.

Enfin, une quatrième et dernière étape de séchage consiste à refroidir les grains de riz avec de l'air à 30°C.

Un séchage complet des grains de riz reconstitués tel que précité nécessite plusieurs heures, de préférence 2 à 5 heures, de manière particulièrement avantageuse 3 heures. Un tel séchage, fractionné, lent et maîtrisé, présente de nombreux avantages dont notamment celui d'obtenir un grain de riz reconstitué présentant une faible humidité, une conservation optimale, un faible risque de rancissement, une texture adaptée et une excellente tenue à la cuisson. Un tel procédé de séchage permet l'obtention avantageuse d'un grain de riz reconstitué présentant un taux d'humidité sensiblement inférieur à 15%, de préférence sensiblement compris entre 12 et 13%. En d'autres termes, le taux d'humidité du grain de riz reconstitué de l'invention est sensiblement identique à celui d'un grain de riz naturel. En outre, l'étape de séchage permet avantageusement de conserver la forme du grain de riz reconstitué après moulage, c'est-à-dire une forme proche de celle d'un grain de riz naturel non expansé. Au terme de ce procédé de fabrication, on obtient donc un grain de riz reconstitué présentant des caractéristiques et des propriétés nutritionnelles et/ou organoleptiques particulièrement intéressantes pour le consommateur. En effet, un grain de riz reconstitué obtenu par un tel procédé de fabrication présente d'une part des qualités nutritionnelles proches de celles d'un grain de riz complet naturel et d'autre part un aspect sensiblement identique à celui d'un grain de riz naturel blanchi. En outre, le grain de riz reconstitué obtenu par ce procédé présente avantageusement une densité et une texture sensiblement identiques à celles d'un grain de riz naturel.

La présente description concerne, de manière indépendante, un dispositif (non revendiqué) destiné à la mise en forme d'un grain de riz reconstitué caractérisé en ce qu'il comprend une surface intérieure recouverte d'un revêtement en polymère thermoplastique destinée à assurer l'obtention d'un grain de riz reconstitué présentant une surface lisse. Avantageusement, ce dispositif comprend un moule de forme sensiblement identique à celle d'un grain de riz naturel, ledit moule étant destiné à former un grain de riz reconstitué à partir de farine de riz et de substances alimentaires. Le moule est préférentiellement conçu pour fabriquer un grain de riz reconstitué d'aspect sensiblement identique à celui d'un grain de riz blanchi. De préférence, le polymère thermoplastique est du téflon qui contribue à rendre la surface extérieure dudit grain de riz reconstitué homogène, lisse et sans relief apparent, de manière similaire à celle d'un grain de riz naturel.

La présente description concerne, en outre, en tant qu'invention indépendante, une installation (non revendiquée) pour la fabrication d'un grain de riz reconstitué caractérisé en ce qu'elle comprend un dispositif conforme à celui précédemment mentionné, savoir un moule conçu pour obtenir un grain de riz dont la forme et l'aspect sont destinés à être identiques à ceux d'un grain de riz naturel. L'installation permet, de manière avantageuse, la réalisation d'un procédé de fabrication d'un grain de riz reconstitué, susceptible d'être conforme au procédé décrit ci-avant, dans lequel un moule est utilisé pour réaliser un grain de riz de forme et d'aspect sensiblement identiques à ceux d'un grain de riz naturel.

La présente description concerne enfin, en tant que tel, un grain de riz reconstitué (non revendiqué) susceptible d'être obtenu par un procédé de fabrication conforme à ce qui précède. Il est alternativement tout à fait envisageable que le grain de riz reconstitué soit obtenu par un autre procédé. Ledit grain de riz reconstitué est obtenu à partir d'un mélange comprenant une farine composée d'au moins une céréale exempte de gluten. Avantageusement, on utilise une farine de riz conforme à celle détaillée dans la description qui précède, savoir de préférence une farine de riz indica comprenant au moins 22 % d'amylose.

Ledit grain de riz reconstitué comprend au moins une substance alimentaire présentant une fonction nutritionnelle et/ou organoleptique. Avantageusement, ladite au moins une substance alimentaire présente, en particulier, une fonction organoleptique et est choisie parmi : les poudres de légumes, les extraits végétaux, les épices, les colorants et les arômes. Alternativement, ladite au moins une substance alimentaire présente, de préférence, une fonction nutritionnelle et est choisie parmi : les fibres alimentaires, les vitamines, les minéraux, les éléments trace, les acides gras insaturés et les acides aminés.

Dans un mode de réalisation avantageux, le grain de riz reconstitué contient au moins 0,5 % en poids de ladite au moins une substance alimentaire, de manière avantageuse au moins 3%, de préférence plus de 7 %. En d'autres termes, le grain de riz reconstitué comprend une composition nutritionnelle avantageuse et supérieure à celle d'un grain de riz naturel blanchi et/ou étuvé.

Dès lors, grâce à cet enrichissement en substance alimentaire, le grain de riz reconstitué présente avantageusement des caractéristiques organoleptiques et/ou nutritionnelles sensiblement identiques à celles d'un grain de riz naturel. En d'autres termes, ce grain de riz reconstitué présente une composition nutritionnelle et/ou organoleptique comparable à celle d'un grain de riz naturel.

Ce grain de riz apporte au consommateur des nutriments en combinaison ou non avec une sensation gustative et/ou texturale et/ou olfactive et/ou visuelle similaire à celle qu'il éprouve lorsqu'il mange un grain de riz naturel. Il est également envisageable, que le grain de riz reconstitué présente des caractéristiques nutritionnelles et/ou organoleptiques qui seraient sensiblement supérieures et/ou différentes de celles d'un grain de riz naturel.

Dans un mode de réalisation préféré, le grain de riz reconstitué présente, en particulier, des caractéristiques nutritionnelles sensiblement proches de celles d'un grain de riz complet. Un tel grain de riz présente l'intérêt d'apporter autant de nutriments et de composés nutritionnels qu'un grain de riz complet, avec un aspect visuel plus attractif pour le consommateur que celui d'un grain de riz naturel complet, en raison notamment de son enrichissement en fibres alimentaires.

A ce propos, ledit grain de riz reconstitué présente un aspect sensiblement identique à celui d'un grain de riz naturel. En d'autres termes, le grain de riz reconstitué présente notamment une apparence et une forme connues et appréciées du consommateur. Le grain de riz de l'invention se caractérise, en particulier, par une forme variant entre ronde et très allongée. Dans le cas où le grain de riz est de forme arrondie ou ronde, sa longueur est sensiblement inférieure à 6 mm, de préférence inférieure à 5,2 mm, et le rapport de sa longueur sur sa largeur est sensiblement inférieur à 2. A l'inverse, si le grain de riz est long de forme allongée, sa longueur est sensiblement supérieure à 6 mm, de préférence supérieure à 7mm, et le rapport de la longueur sur la largeur du grain de riz est sensiblement supérieur à 2. De manière avantageuse, la forme du grain de riz est obtenue avec le moule précédemment décrit, dont les dimensions et la forme correspondent à celles du grain de riz reconstitué.

Dans un mode de réalisation particulièrement avantageux, le grain de riz reconstitué présente une texture homogène sensiblement identique à celle d'un grain de riz naturel.

De manière avantageuse, ledit grain de riz reconstitué présente une densité sensiblement identique à celle d'un grain de riz naturel, de préférence sensiblement comprise entre 0,5 et 1, et avantageusement sensiblement égale à 0,79. La densité du grain de riz reconstitué est préférentiellement la même que celle d'un grain de riz naturel de conformation identique au grain de riz reconstitué. Par exemple, un grain de riz reconstitué de type indica a une densité de 0,79, sensiblement égale à celle d'un grain de riz indica naturel, dont la longueur et le rapport longueur sur largeur sont généralement sensiblement supérieurs respectivement à 6,6 mm et à 3.

De manière préférée, ce grain de riz présente en outre un aspect translucide sensiblement identique à celui d'un grain de riz naturel translucide. Classiquement, les grains de riz naturels commercialisés pour la consommation humaine sont sensiblement translucides, de couleur blanche ou légèrement jaune. Le grain de riz reconstitué présente donc une surface, sensiblement blanche ou jaune, qui laisse passer au moins partiellement la lumière, à la manière d'un grain de riz naturel.

Ce grain de riz présente préférentiellement un aspect blanchi sensiblement identique à celui d'un grain de riz blanchi, c'est-à-dire un aspect visuel proche d'un grain riz ayant subi un traitement pour retirer tout ou partie des enveloppes qui l'entourent. Un tel grain de riz reconstitué est visuellement attractif pour un consommateur qui reconnaît et apprécie les grains de riz blanchis.

Par ailleurs, ce grain de riz reconstitué présente une surface extérieure sensiblement lisse, savoir dépourvue d'aspérités, d'irrégularités ou de rugosités. Le grain de riz comprend une surface lisse, polie et régulière, qui présente l'avantage d'être particulièrement attrayante pour le consommateur, lequel l'associe à la surface d'un grain de riz naturel blanchi.

Alternativement, le grain de riz reconstitué peut présenter un aspect sensiblement semblable à celui d'un grain de riz étuvé, également très répandu dans le riz de consommation humaine.

Enfin, ce grain de riz reconstitué est préférentiellement dépourvu de fissure ce qui favorise sa tenue dans le temps. Le grain de riz comprend une structure particulièrement semblable à celle d'un grain de riz naturel, savoir compacte et sans fêlures ni fentes, une telle structure garantissant une parfaite cohésion et tenue du grain de riz lors de la cuisson.

Ce grain de riz reconstitué présente l'intérêt d'une part d'être visuellement attractif pour le consommateur, car d'aspect sensiblement identique aux grains de riz naturels largement commercialisés, et d'autre part de jouer un rôle nutritionnel et/ou organoleptique supérieur à celui des grains de riz blanchis ou étuvés du commerce.

Ce grain de riz reconstitué présente en outre, préférentiellement, un comportement à la cuisson sensiblement identique à celui d'un grain de riz naturel. De préférence, le grain de riz reconstitué nécessite une cuisson dans de l'eau bouillante, pendant un temps identique à celui d'un grain de riz naturel, pour sa consommation. En d'autres termes, il réagit de manière similaire à celle d'un grain de riz naturel lors d'une utilisation classique, par exemple lors de sa cuisson dans de l'eau portée à ébullition. De manière avantageuse, le grain de riz reconstitué présente une prise d'eau à la cuisson, après un temps de cuisson déterminé dans de l'eau bouillante, sensiblement identique à celle d'un grain de riz naturel dont la forme et le temps de cuisson sont sensiblement identiques à ceux du grain de riz reconstitué, ladite prise d'eau étant de préférence sensiblement comprise entre 120 et 160 % pour le temps de cuisson déterminé. En d'autres termes, pour un temps optimal de cuisson identique, le grain de riz reconstitué a le même comportement, en particulier la même prise d'eau, qu'un grain de riz naturel dont la conformation est similaire à celle du grain de riz reconstitué.

Ainsi, les caractéristiques et propriétés du grain de riz à la cuisson, par exemple dans de l'eau chaude, sont sensiblement les mêmes que celles d'un grain de riz naturel de même conformation et de même origine, notamment en terme de modification de sa texture et de sa dureté.

Ce grain de riz présente notamment et de manière particulièrement avantageuse une texture proche de celle d'un grain de riz naturel ; il est d'ailleurs sans fissure, translucide et de surface lisse. L'ensemble de ces caractéristiques permet au grain de riz de présenter un comportement, notamment lors de sa cuisson et de sa conservation, semblable à celui des riz naturels du commerce. Ce sont toutes ses caractéristiques et ses propriétés qui rendent le grain de riz reconstitué attractif et apprécié par le consommateur.

EXEMPLES

A titre illustratif et conformément à l'invention, deux exemples de formulation de grains de riz reconstitués obtenus selon le procédé de l'invention ainsi qu'un exemple comparatif entre plusieurs types de grains de riz sont présentés dans ce qui suit. Ces exemples sont fournis à titre purement explicatif et non limitatif. Les ingrédients sont exprimés dans chacun des exemples en pourcentage du poids total du grain de riz.

Exemple 1 : Recette d'un grain de riz reconstitué dont la composition nutritionnelle est identique à celle d'un grain de riz naturel complet

| Farine de riz indica | 91,2 |
|---|---|
| Mono-glycérides | 0,5 |
| Prémix vitamines et minéraux* | 2,8 |
| Fibres alimentaires | 5,5 |
| * *vitamines B1, B3, B5, B6 et B9, phosphore, magnésium* | |

Cette formulation permet, à l'aide du procédé précédemment décrit, d'obtenir un grain de riz reconstitué présentant des caractéristiques proches de celles d'un grain de riz naturel classique connu du consommateur. En particulier, un grain de riz obtenu à l'aide de cette recette et du procédé susmentionné, a une couleur claire, un goût neutre, une texture homogène, ferme et élastique, une surface lisse et un temps de cuisson court. En outre, ce grain de riz présente des qualités nutritionnelles sensiblement identiques à celles d'un grain de riz complet.

Une telle formulation présente l'intérêt de permette l'obtention d'un grain de riz d'aspect visuel attractif similaire à celui d'un grain de riz naturel blanchi et de composition nutritionnelle intéressante sensiblement identique à celle d'un grain de riz complet. Ce grain de riz reconstitué constitue donc un substitut efficace au grain de riz complet, souvent rejeté par les consommateurs en raison de son goût, de sa texture râpeuse et de son temps de cuisson trop long.

Exemple 2 : Recette d'un grain de riz reconstitué présentant des caractéristiques organoleptiques (couleur et goût)

| Farine de riz indica | 97,2 |
|---|---|
| Mono-glycérides | 0,5 |

(suite)

| Poudre de tomate | 2,0 |
|---|---|
| Arômes herbes de Provence | 0,3 |

La mise en oeuvre de cette formulation dans un procédé conforme à celui décrit ci-avant permet l'obtention d'un grain de riz reconstitué présentant d'une part une composition nutritionnelle proche de celle d'un grain de riz naturel blanchi, classiquement consommé, et d'autre part une couleur et un goût attractif pour le consommateur. Ce grain de riz reconstitué permet de remédier au déficit de goût et d'appétence souvent reproché au riz blanchi traditionnellement consommé.

Il est également possible d'ajouter à la recette de ce grain de riz des vitamines et des minéraux de manière à obtenir, en plus d'une fonction organoleptique, une fonction nutritionnelle proche de celle d'un grain de riz complet.

Exemple 3 : Comparatif entre différents grains de riz reconstitués ou non

Objectif :

Cet exemple a pour objectif de comparer certaines caractéristiques et propriétés de grains de riz de différentes origines. Dans cet exemple, trois grains de riz sont comparés :

- Grain de riz 1 : grain de riz reconstitué par le procédé de l'invention,

- Grain de riz 2 : grain de riz reconstitué par un procédé antérieur,

- Grain de riz 2 : grain de riz naturel indica blanchi.

Matériel et méthode :

Ces trois grains de riz sont comparés selon les critères suivants :

• *Avant cuisson :*

1/ Humidité : l'humidité des grains de riz est mesurée avant la cuisson à l'aide d'une méthode classique d'estimation de l'humidité résiduelle. L'humidité est mesurée selon la norme AFNOR V03-712 de juin 1989.

2/ Longueur et épaisseur : la longueur et l'épaisseur des grains de riz sont mesurées à l'aide d'un pied à coulisse sur 20 grains de riz prélevés au hasard. Les résultats des 20 grains de riz permettent de déterminer une moyenne et une plage de variation.

3/ Aspect du grain : l'aspect du grain est décrit, selon un protocole interne, par un panel professionnel à partir de critères fixes préalablement définis.

• *Après cuisson*

1/ Temps de cuisson : il est déterminé, selon un protocole interne, par dégustation par un panel professionnel. Il est optimal quand tout le grain est hydraté jusqu'au coeur.

2/ Prise d'eau : la prise d'eau des grains de riz permet de caractériser la quantité d'eau absorbée par les grains après un temps défini de cuisson à l'eau bouillante et un égouttage. La prise d'eau est mesurée selon le protocole interne suivant :

- porter à ébullition un litre d'eau,

- mettre 100g de riz dans l'eau bouillante,

- laisser cuire à ébullition pendant 10 minutes,

- égoutter dans une passoire pendant une minute et peser le riz cuit égoutté.

La prise d'eau est définie par la formule :

$$\text{Prise d'eau (\%)} = \text{poids du riz cuit} - 100\text{ g (poids du riz sec initial)}$$

$$= \text{quantité d'eau absorbée pour 100g de riz sec}$$

3/ Analyse sensorielle : la fermeté et la texture du grain sont appréciées, selon un protocole interne, par un panel professionnel à partir de critères fixes préalablement définis.

Le tableau suivant présente les résultats du test comparatif :

| | | GRAIN DE RIZ 1 | GRAIN DE RIZ 2 | GRAIN DE RIZ 3 |
|---|---|---|---|---|
| **Analyse avant cuisson** | Humidité (%) | 9.46 | 13.65 | 12.5 |
| | Longueur (mm) | 7.04 | 6.82 | 6.74 |
| | Epaisseur (mm) | 1.57 | 1.67 | 1.63 |
| | Aspect grain | Légèrement jaune, lisse, translucide | Blanc, rugueux, opaque | Blanc, lisse légèrement translucide |
| **Analyse après 10 min de cuisson** | Prise d'eau | 143% | 210 % | 149 % |
| | Analyse sensorielle | Grain ferme moyennement élastique texture homogène | Grain un peu mou gluant | Grain ferme en surface non hydraté à coeur texture hétérogène |

Ces résultats permettent une comparaison des différents grains de riz testés.

Si l'on compare le grain de riz 1 obtenu par le procédé de l'invention avec le grain de riz 3, c'est-à-dire avec un grain de riz naturel blanchi, on se rend compte que les caractéristiques avant cuisson des grains 1 et 3 sont sensiblement identiques. En regard des résultats de cette analyse, l'aspect extérieur avant cuisson du grain de riz 1 est donc sensiblement semblable à celui du grain de riz 3. Après cuisson, le grain de riz 1 présente des caractéristiques améliorées par rapport au grain de riz 3. En effet, le grain de riz 1 est ferme et de texture homogène, ce qui n'est pas le cas du grain de riz 3. Le procédé de reconstitution d'un grain de riz conforme à la présente invention permet donc d'obtenir un grain de riz 1 présentant un aspect avant cuisson proche de celui d'un grain de riz naturel (grain de riz 3) et des propriétés après cuisson améliorées par rapport audit grain de riz naturel.

En outre, par rapport au grain de riz reconstitué antérieur, c'est-à-dire par rapport au grain de riz 2, le grain de riz 1 présente des caractéristiques avant cuisson améliorées, notamment en termes d'état de surface et de translucidité. En outre, le grain de riz 2 présente une texture molle et gluante en fin de cuisson, ce qui n'est pas le cas du grain de riz obtenu par le procédé de l'invention qui lui est ferme, moyennement élastique et de texture homogène, en fin de cuisson. Ainsi, le grain de riz reconstitué obtenu par le procédé de l'invention présente des caractéristiques et propriétés, à la fois intrinsèques et extrinsèques, notamment en termes d'aspect, de surface, de forme, de texture et de couleur, sensiblement identiques à celles d'un grain de riz naturel, à la fois avant et après cuisson. Les propriétés du grain de riz reconstitué 1 sont donc maintenues après la cuisson.

Ce test comparatif permet de mettre en valeur les avantages précédemment décrit du grain de riz reconstitué obtenu par le procédé de l'invention, notamment en comparaison d'un grain de riz reconstitué antérieur et d'un grain de riz naturel.

Ainsi, l'invention permet la fabrication d'un grain de riz reconstitué présentant d'une part un aspect et un comportement sensiblement proches de celui d'un grain de riz naturel blanchi habituellement consommé et apprécié du consommateur, et d'autre part des caractéristiques nutritionnelles et/ou organoleptiques supérieures à celles du riz naturel blanchi.

**Revendications**

1. Procédé de fabrication d'un grain de riz reconstitué, ledit procédé comprenant :

   - une étape (a) de fabrication d'un mélange comprenant une farine composée d'au moins une céréale exempte de gluten, le mélange de l'étape (a) comprenant également au moins une substance alimentaire, ajoutée à ladite farine, et présentant une fonction nutritionnelle et / ou organoleptique,
   - une étape (c) de chauffage du mélange s'effectuant à une température sensiblement supérieure à 100°C,
   - une étape (d) de compression du mélange, ladite étape (d) étant destinée à assurer une cohésion dudit mélange,
   - une étape (e) de mise en forme du mélange,

   ledit procédé étant **caractérisé en ce qu'**il comprend une étape (b) d'hydratation du mélange obtenu au cours de l'étape (a), et **en ce que** l'étape (e) est une mise en forme du mélange sous forme de grains de riz qui comprend une sous-étape de moulage dudit mélange obtenu à l'étape (d), ladite sous-étape de moulage étant réalisée à l'aide d'un moule en forme de grain de riz, ledit moule ayant une surface intérieure recouverte d'un revêtement en polymère thermoplastique destiné à assurer l'obtention d'un grain de riz reconstitué présentant une surface lisse.

2. Procédé selon la revendication précédente, **caractérisé en ce que** la température au cours de l'étape (c) est sensiblement supérieure à 150°C.

3. Procédé selon l'une quelconque des revendications précédentes, **caractérisé en ce que** l'étape (c) comprend un apport de vapeur.

4. Procédé selon l'une quelconque des revendications précédentes, **caractérisé en ce que** l'étape (b) comprend un apport de chaleur au cours duquel la température est sensiblement inférieure à 70°C, de préférence inférieure à 50°C, de préférence sensiblement égale à 45°C.

5. Procédé selon l'une quelconque des revendications précédentes, **caractérisé en ce qu'**il comprend, préalablement à l'étape (d), une étape (f) de vide d'air destinée à éliminer les bulles d'air susceptibles d'être présentes dans le mélange.

6. Procédé selon l'une quelconque des revendications précédentes, **caractérisé en ce que** la farine de l'étape (a) est majoritairement composée de riz.

7. Procédé selon l'une quelconque des revendications précédentes, **caractérisé en ce que** ladite au moins une substance alimentaire de l'étape (a) présente une fonction organoleptique et est choisie parmi : les poudres de légumes, les extraits végétaux, les épices, les colorants et les arômes.

8. Procédé selon l'une quelconque des revendications précédentes, **caractérisé en ce que** ladite au moins une substance alimentaire de l'étape (a) présente une fonction nutritionnelle et est choisie parmi : les vitamines, les minéraux, les éléments trace, les acides gras insaturés et les acides aminés.

9. Procédé selon l'une quelconque des revendications précédentes, **caractérisé en ce que** le grain de riz reconstitué contient au moins 0,5 % en poids de ladite au moins une substance alimentaire.

10. Procédé selon l'une quelconque des revendications précédentes, **caractérisé en ce que** la granulométrie du mélange obtenu à l'étape (a) est destinée à être sensiblement inférieure à 500 $\mu$m, de préférence sensiblement inférieure à 250 $\mu$m.

11. Procédé selon l'une quelconque des revendications précédentes, **caractérisé en ce qu'**il comprend, postérieurement à l'étape (e), une étape de séchage au cours de laquelle un contrôle permanent de la température et de l'humidité permet d'obtenir un grain de riz reconstitué dépourvu de fissures présentant une répartition homogène de son humidité.

**Patentansprüche**

1. Verfahren zur Herstellung eines rekonstituierten Reiskorns, wobei das Verfahren umfasst:

- einen Schritt (a) der Herstellung einer Mischung, umfassend ein Mehl, bestehend aus mindestens einem glutenfreien Getreide, wobei die Mischung von Schritt (a) auch mindestens eine Nahrungsmittelsubstanz umfasst, die dem Mehl zugesetzt wird, und eine nutritive und/oder organoleptische Funktion aufweist,
- einen Schritt (c) des Erhitzens der Mischung, der bei einer Temperatur im Wesentlichen höher als 100°C durchgeführt wird,
- einen Schritt (d) der Kompression der Mischung, wobei der Schritt (d) dazu bestimmt ist, eine Kohäsion der Mischung sicherzustellen,
- einen Schritt (e) des Formens der Mischung,

wobei das Verfahren **dadurch gekennzeichnet ist, dass** es einen Schritt (b) der Hydratation der Mischung, die während des Schritts (a) erhalten wird, umfasst, und dadurch, dass der Schritt (e) ein Formen der Mischung in die Form von Reiskörnern umfasst, das einen Teilschritt des Gießens der Mischung, die in dem Schritt (d) erhalten wird, umfasst, wobei der Teilschritt des Gießens mit Hilfe einer Gussform in der Form eines Reiskorns vorgenommen wird, wobei die Gussform eine Innenfläche aufweist, welche mit einer Beschichtung aus thermoplastischem Polymer bedeckt ist, die dazu bestimmt ist, das Erhalten eines rekonstituierten Reiskorns mit einer glatten Oberfläche sicherzustellen.

2. Verfahren nach dem vorhergehenden Anspruch, **dadurch gekennzeichnet, dass** die Temperatur während des Schritts (c) im Wesentlichen höher als 150°C ist.

3. Verfahren nach einem der vorhergehenden Ansprüche, **dadurch gekennzeichnet, dass** der Schritt (c) eine Zufuhr von Dampf umfasst.

4. Verfahren nach einem der vorhergehenden Ansprüche, **dadurch gekennzeichnet, dass** der Schritt (b) eine Zufuhr von Wärme umfasst, während welcher die Temperatur im Wesentlichen niedriger als 70°C ist, vorzugsweise niedriger als 50°C, vorzugsweise im Wesentlichen gleich 45°C.

5. Verfahren nach einem der vorhergehenden Ansprüche, **dadurch gekennzeichnet, dass** es vor dem Schritt (d) einen Schritt (f) eines des Anlegens eines Vakuums umfasst, der dazu bestimmt ist, die Luftblasen zu entfernen, die in der Mischung vorhanden sein können.

6. Verfahren nach einem der vorhergehenden Ansprüche, **dadurch gekennzeichnet, dass** das Mehl des Schritts (a) mehrheitlich aus Reis besteht.

7. Verfahren nach einem der vorhergehenden Ansprüche, **dadurch gekennzeichnet, dass** die mindestens eine Nahrungsmittelsubstanz des Schritts (a) eine organoleptische Funktion aufweist und ausgewählt wird aus: Gemüsepulvern, Pflanzenextrakten, Gewürzen, Farbstoffen und Aromen.

8. Verfahren nach einem der vorhergehenden Ansprüche, **dadurch gekennzeichnet, dass** die mindestens eine Nahrungsmittelsubstanz des Schritts (a) eine nutritive Funktion aufweist und ausgewählt wird aus: Vitaminen, Mineralien, Spurenelementen, ungesättigten Fettsäuren und Aminosäuren.

9. Verfahren nach einem der vorhergehenden Ansprüche, **dadurch gekennzeichnet, dass** das rekonstituierte Reiskorn mindestens 0,5 Gew.-% der mindestens einen Nahrungsmittelsubstanz enthält.

10. Verfahren nach einem der vorhergehenden Ansprüche, **dadurch gekennzeichnet, dass** die Granulometrie der Mischung, die in dem Schritt (a) erhalten wird, dazu bestimmt ist, im Wesentlichen kleiner als 500 $\mu$m, vorzugsweise im Wesentlichen kleiner als 250 $\mu$m, zu sein.

11. Verfahren nach einem der vorhergehenden Ansprüche, **dadurch gekennzeichnet, dass** es nach dem Schritt (e) einen Schritt des Trocknens umfasst, in dem eine permanente Steuerung der Temperatur und der Feuchtigkeit es ermöglicht, ein rekonstituiertes Reiskorn ohne Risse zu erhalten, das eine homogene Verteilung seiner Feuchtigkeit aufweist.

**Claims**

1. Method of producing a reconstituted grain of rice, said method comprising:

- a step (a) of producing a mixture comprising a flour composed of at least one gluten-free cereal, the mixture of step (a) likewise comprising at least one food substance added to said flour and having a nutritional and/or organoleptic function,
- a step (c) of heating the mixture taking place at a temperature substantially greater than 100 °C,
- a step (d) of compressing the mixture, said step (d) being intended to ensure a cohesion of said mixture,
- a step (e) of shaping the mixture,

said method being **characterised in that** it comprises a step (b) of hydrating the mixture obtained in the course of step (a), and **in that** the step (e) is a shaping of the mixture in the form of grain of rice which comprises a sub-step of moulding said mixture obtained in step (d), said sub-step of moulding being carried out with the aid of a mould in the shape of a grain of rice, said mould having an internal surface covered with a coating of thermoplastic polymer intended to ensure that a reconstituted grain of rice having a smooth surface is obtained.

2. Method according to the preceding claim, **characterised in that** the temperature in the course of step (c) is substantially greater than 150 °C.

3. Method according to any of the preceding claims, **characterised in that** the step (b) comprises supplying steam.

4. Method according to any of the preceding claims, **characterised in that** the step (c) comprises supplying heat, in the course of which the temperature is substantially less than 70 °C, preferably less than 50 °C, preferably substantially equal to 45 °C.

5. Method according to any of the preceding claims, **characterised in that** it comprises, prior to the step (d), a vacuum step (f) intended to eliminate the air bubbles which may be present in the mixture.

6. Method according to any one of the preceding claims, **characterised in that** the flour of step (a) is predominantly composed of rice.

7. Method according to any of the preceding claims, **characterised in that** said at least one food substance of step (a) has an organoleptic function and is chosen from among: vegetable powders, plant extracts, spices, colourings and flavourings.

8. Method according to any of the preceding claims, **characterised in that** said at least one food substance of step (a) has a nutritional function and is chosen from among: vitamins, minerals, trace elements, unsaturated fatty acids and amino acids.

9. Method according to any of the preceding claims, **characterised in that** the reconstituted grain of rice contains at least 0.5% by weight of said at least one food substance.

10. Method according to any of the preceding claims, **characterised in that** the particle size of the mixture obtained in step (a) is intended to be substantially less than 500 $\mu$m, preferably substantially less than 250 $\mu$m.

11. Method according to any of the preceding claims, **characterised in that** it comprises, after the step (e), a step of drying in the course of which permanent monitoring of the temperature and of the humidity makes it possible to obtain a reconstituted grain of rice which is devoid of gaps and exhibits a homogeneous distribution of humidity.

**EP 2 348 889 B1**

**RÉFÉRENCES CITÉES DANS LA DESCRIPTION**

**Documents brevets cités dans la description**

- EP 0913096 A